# EUROPEAN PATENT APPLICATION

(11) **EP 4 835 615 A1**
(43) Date of publication of application: **04.11.2026**
(21) Application number: 23962473.7
(22) Date of filing: 26.12.2023
(51) Int. Cl.: G06F 3/01

(54) **INFORMATION ANALYSIS SYSTEM**

(71) Applicant: JTEKT CORPORATION, Kariya-shi, Aichi 448-8652 (JP)
(72) Inventor: SHIBATA Yoshiyuki, Kariya-shi, Aichi 448-8652 (JP); UMEZAWA Hiroki, Kariya-shi, Aichi 448-8652 (JP); NIIMI Masatoshi, Kariya-shi, Aichi 448-8652 (JP)
(74) Representative: TBK
(86) International application number: PCT/JP2023/046655
(87) International publication number: WO 2025/141697

(57) **Abstract**

An information analysis system includes: a first motion information acquisition unit that acquires first motion information that is created using a first sensor attached to a head of a person; a first position information acquisition unit that acquires first position information that is position information of the person; a second motion information acquisition unit that acquires second motion information that is created using a second sensor different from the first sensor; a second position information acquisition unit that acquires second position information that is created using a second sensor different from the first sensor; a motion information correction unit that corrects the first motion information using the second motion information; and a position information correction unit that corrects the first position information using the second position information.

## Description

### TECHNICAL FIELD

The present disclosure relates to an information analysis system.

### BACKGROUND ART

Conventionally, attempts have been made to detect a person's state such as a line-of-sight direction, for example, in order to provide services. For example, in Patent Document 1, the line-of-sight direction of a person is detected in order to provide audio guidance on a target object at which the person is gazing.

### Related Art Documents

### Patent Documents

Patent Document 1: Japanese Unexamined Patent Application Publication No. 2015-079310

### SUMMARY OF THE INVENTION

### Problem to be Solved by the Invention

When detecting the direction of a person's face using a sensor attached to the head, an error is likely to occur depending on how the sensor is attached.

### Means for Solving the Problem

The present disclosure can be implemented in the following aspects.
(1) According to one aspect of the present disclosure, an information analysis system is provided. The information analysis system includes: a first motion information acquisition unit that acquires first motion information that is created using a first sensor attached to a head of a person and indicates a motion of the head; a first position information acquisition unit that acquires first position information that is created using a position information acquisition unit attached to the person and is position information of the person; a second motion information acquisition unit that acquires second motion information that is created using a second sensor different from the first sensor and indicates the motion of the head; a second position information acquisition unit that acquires second position information that is created using a second sensor different from the first sensor and is the position information; a motion information correction unit that corrects the first motion information using the second motion information; and a position information correction unit that corrects the first position information using the second position information. According to the present aspect, the accuracy of the first motion information and the first position information can be improved.
(2) In the information analysis system according to the above aspect, the second sensor used to create the second motion information may be an image sensor that is the same as the second sensor used to create the second position information, and each of the second motion information and the second position information may be information created using an image including the person , the image being captured by an imaging device including the second sensor and having a known installation position. According to the present aspect, by using the image captured using the imaging device located at the known installation position, the second motion information and the second position information with less deviations can be used for correction. Therefore, the accuracy of the first motion information and the first position information can be improved.
(3) The information analysis system according to the above aspect may further include a creation unit that uses the first motion information and the first position information to identify a target object to which the person has turned a face, and creates target object information including the target object. According to the present aspect, the creation unit can create the target object information.
(4) In the information analysis system according to the above aspect, the creation unit may create at least one of (a) target object history information in which the target objects are arranged in chronological order in which the person has turned the face to the target objects, and (b) target object history information in which the target objects are arranged in descending order of a viewing period in which the person has directed the face to the target objects. According to the present aspect, the creation unit can create the target object history information.
(5) In the information analysis system according to the above aspect, the target object may be a commercial product, and the information analysis system may further include an information addition unit that adds identification information of the commercial product to the target object information. According to the present aspect, the additional information unit can add the identification information of the commercial product to the target object information. With the target object information to which the identification information of the commercial product is added, analysis can be performed on the behavior of the person to select the commercial product.
(6) In the information analysis system according to the above aspect, the target object may be an advertisement, and the information analysis system may further include an information addition unit that adds identification information of the advertisement to the target object information. According to the present aspect, the additional information unit can add the identification information of the advertisement to the target object information. With the target object information to which the identification information of the advertisement is added, analysis can be performed on the influence of the advertisement on the person.
(7) In the information analysis system according to the above aspect, the first sensor may be a motion sensor built in an ear-attached device. According to the present aspect, the motion sensor built in the ear-attached device can be used as the first sensor.
(8) The information analysis system according to the above aspect may further include: a psychological information acquisition unit that acquires psychological information indicating a psychological state of the person; and an information addition unit that adds the psychological information to the target object information. According to the present aspect, the information addition unit can add the psychological information to the target object information.
(9) In the information analysis system according to the above aspect, the psychological information may include at least one of a heart rate of the person and information on a complexion of the person. According to the present aspect, either the heart rate of the person or the information on the complexion of the person can be used as the psychological information.
(10) In the information analysis system according to the above aspect, the information addition unit may use the psychological information to determine an evaluation value indicating a level of interest of the person in the target object, and add the evaluation value to the target object information. According to the present aspect, the influence of the commercial product on the person can be analyzed more easily with the evaluation value.
(11) The information analysis system according to the above aspect may further include: a sound information acquisition unit that acquires sound information that is presumably heard by the person; and an information addition unit that adds the sound information to the target object history information. According to the present aspect, the information addition unit can add the sound information to the target object history information.
The present disclosure can be implemented in various forms such as an information analysis method and an information analysis program in addition to the information analysis system described above.

### BRIEF DESCRIPTION OF THE DRAWINGS

[FIG. 1] FIG. 1 is a block diagram showing the configuration of an information analysis system.
[FIG. 2] FIG. 2 is a diagram illustrating a purchaser carrying an ear-attached device and a mobile terminal device.
[FIG. 3] FIG. 3 is a block diagram showing the configuration of the ear-attached device and the configuration of the mobile terminal device.
[FIG. 4] FIG. 4 is a diagram illustrating detection by a motion sensor.
[FIG. 5] FIG. 5 is a block diagram showing the configuration of an image analysis device.
[FIG. 6] FIG. 6 is a diagram illustrating an information correction process.
[FIG. 7] FIG. 7 is a flowchart showing the procedure of the information correction process.
[FIG. 8] FIG. 8 is a diagram illustrating correction of first motion information.
[FIG. 9] FIG. 9 is a block diagram showing the configuration of an information analysis system according to a second embodiment.
[FIG. 10] FIG. 10 is a flowchart showing the procedure of a purchase information creation process.
[FIG. 11] FIG. 11 is a diagram showing purchase information.
[FIG. 12] FIG. 12 is a flowchart showing the procedure of an information addition process.
[FIG. 13] FIG. 13 is a diagram showing commercial product information.

### MODES FOR CARRYING OUT THE INVENTION

### A. First Embodiment:

### A1. Configuration of Information Correction System:

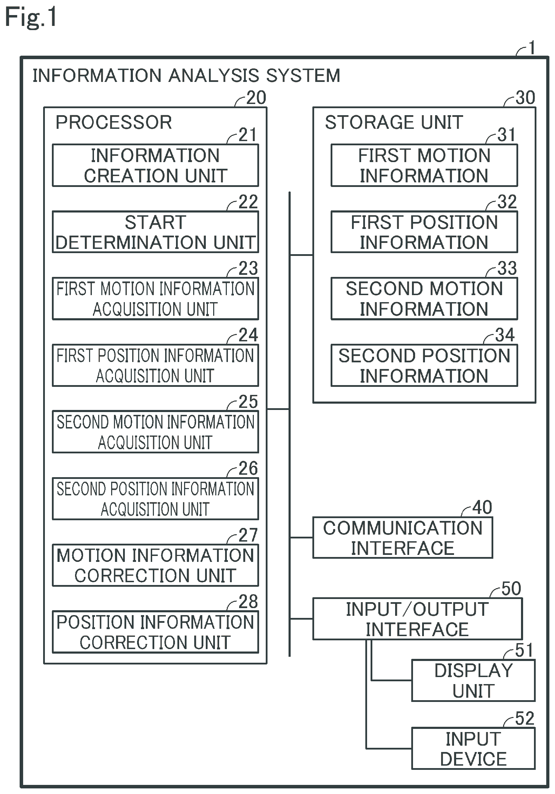

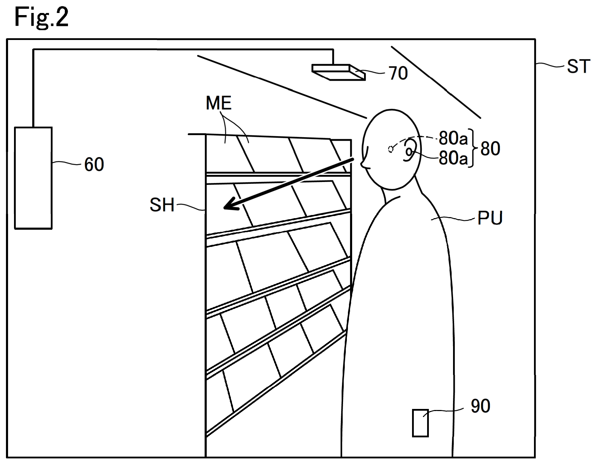

FIG. 1 is a block diagram showing the configuration of an information analysis system 1. FIG. 2 is a diagram illustrating a purchaser PU carrying an ear-attached device 80 and a mobile terminal device 90 that are targets of processing by the information analysis system 1. As described later, the ear-attached device 80 includes a motion sensor 81 as a first sensor. The information analysis system 1 corrects first motion information 31 etc. described later created using a detected value output by the motion sensor 81 to reduce errors. Thus, it is possible to improve the accuracy of analysis of, for example, motions of the purchaser PU using the first motion information 31.

As shown in FIG. 1, the information analysis system 1 is configured as a computer in which a processor 20, a storage unit 30, a communication interface 40, and an input/output interface 50 are interconnected by a bus. The input/output interface 50 is connected to a display unit 51 such as a liquid crystal display and an input device 52 such as a keyboard and a mouse. The processor 20 executes programs stored in the storage unit 30 to perform various processes. The processor 20 includes, as functional units, an information creation unit 21, a start determination unit 22, a first motion information acquisition unit 23, a first position information acquisition unit 24, a second motion information acquisition unit 25, a second position information acquisition unit 26, a motion information correction unit 27, and a position information correction unit 28. Each functional unit is implemented by executing a program stored in the storage unit 30. The motion information correction unit 27 corrects the first motion information 31 using second motion information 33. The position information correction unit 28 corrects first position information 32 using second position information 34.

The storage unit 30 is implemented by memories such as a RAM or a ROM. The storage unit 30 stores the first motion information 31, the first position information 32, the second motion information 33, and the second position information 34. The communication interface 40 communicates with external devices such as the mobile terminal device 90 and an image analysis device 60 described later via a network such as the Internet. The first motion information 31 is information indicating a motion of the head of a person, specifically, the purchaser PU, and created using the motion sensor 81 serving as the first sensor attached to the head of the purchaser PU. The first position information 32 is position information of a person, specifically, the purchaser PU, created using a position information acquisition unit 94 attached to the purchaser PU. In the present disclosure, the phrase "attached to a person" includes a state in which a device is fixed to the person's body and a state in which the device is carried by the person. Specifically, the "state in which the device is carried by the person" includes a state in which the person holds the device in his/her hand, a state in which the device is placed in a bag carried by the person, etc. As described later, in the present embodiment, the motion sensor 81 is built in the ear-attached device 80. The position information acquisition unit 94 is built in the mobile terminal device 90 carried by the purchaser PU. The second motion information 33 is information indicating a motion of the purchaser PU and created using an image sensor 71 serving as a second sensor different from the motion sensor 81. The second position information acquisition unit 26 acquires the position information of the purchaser PU created using the image sensor 71 serving as the second sensor different from the motion sensor 81.

The information analysis system 1 communicates with each of the mobile terminal device 90 and the image analysis device 60. As shown in FIG. 2, the mobile terminal device 90 is carried by the purchaser PU. The purchaser PU carrying the mobile terminal device 90 has the ear-attached device 80 attached to his/her ears.

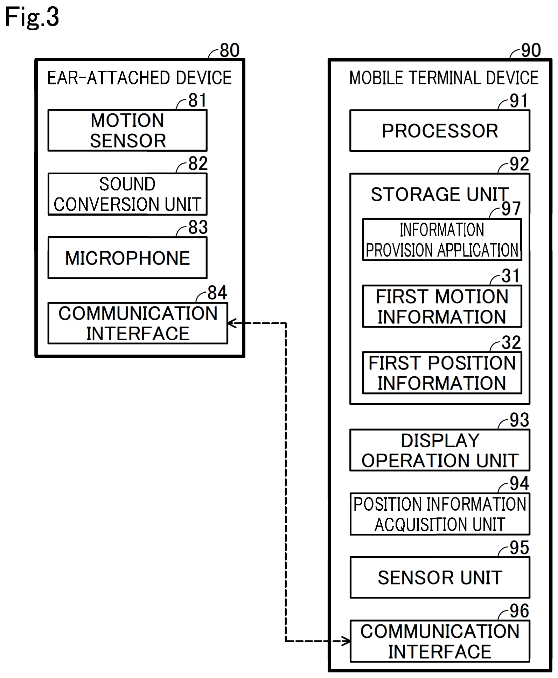

FIG. 3 is a block diagram showing the configuration of the ear-attached device 80 and the configuration of the mobile terminal device 90. The ear-attached device 80 includes, in a pair of housings 80a shown in FIG. 2, the motion sensor 81, a sound conversion unit 82, a microphone 83, and a communication interface 84 shown in FIG. 3. The motion sensor 81 and the microphone 83 may be built in both of the pair of housings 80a, or may be built in either one of the housings 80a.

The motion sensor 81 detects a motion of the head of the purchaser PU. Specifically, the motion sensor 81 is a general-purpose so-called six-axis motion sensor. Specifically, the motion sensor 81 includes a three-axis acceleration sensor and a three-axis angular velocity sensor. The motion sensor 81 detects an acceleration [m/s²] along each of the three axes and an angular velocity [deg/s] along each of the three axes.

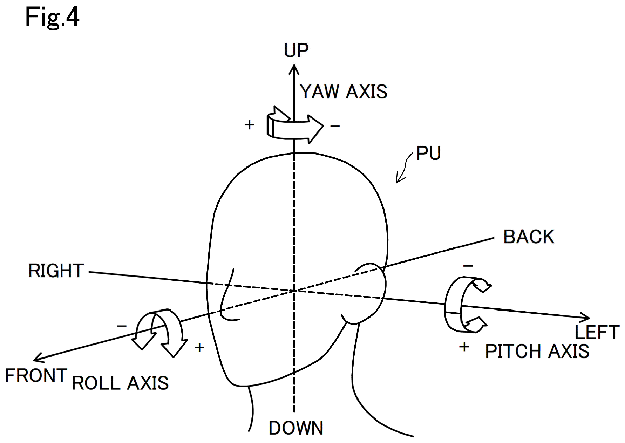

FIG. 4 is a diagram illustrating detection by the motion sensor 81. As shown in FIG. 4, the three axes along which the motion sensor 81 detects each of the acceleration and the angular velocity are specifically a yaw axis, a roll axis, and a pitch axis orthogonal to each other. The yaw axis is an axis parallel to an up-down direction with the purchaser PU as the reference. The roll axis is an axis parallel to a front-rear direction with the purchaser PU as the reference. The pitch axis is an axis parallel to a right-left direction with the purchaser PU as the reference. For the acceleration on the yaw axis, the motion sensor 81 outputs a positive value when the purchaser PU moves his/her head upward, and outputs a negative value when the purchaser PU moves his/her head downward. For the acceleration on the roll axis, the motion sensor 81 outputs a positive value when the purchaser PU moves his/her head forward, and outputs a negative value when the purchaser PU moves his/her head backward. For the acceleration on the pitch axis, the motion sensor 81 outputs a positive value when the purchaser PU moves his/her face leftward, and outputs a negative value when the purchaser PU moves his/her head rightward. For the angular velocity on the yaw axis, the motion sensor 81 outputs a positive value when the purchaser PU turns his/her face rightward, and outputs a negative value when the purchaser PU turns his/her face leftward. For the angular velocity on the roll axis, the motion sensor 81 outputs a positive value when the purchaser PU tilts his/her head leftward, and outputs a negative value when the purchaser PU tilts his/her head rightward. For the angular velocity on the pitch axis, the motion sensor 81 outputs a positive value when the purchaser PU turns his/her face downward, and outputs a negative value when the purchaser PU turns his/her face upward. Therefore, the motion of the head can be detected from the change in acceleration and the change in angular velocity along each of the three axes.

The sound conversion unit 82 shown in FIG. 3 converts sound data that is an electric signal into sound and emits it toward the ear of the purchaser PU. The microphone 83 converts sound into sound data that is an electric signal. The microphone 83 outputs the acquired audio data to the communication interface 84. The communication interface 84 performs short-range communication with the mobile terminal device 90. In the present embodiment, the communication interface 84 and the mobile terminal device 90 communicate with each other in accordance with Bluetooth (registered trademark). The communication interface 84 is implemented by an electronic circuit etc.

In the present embodiment, the mobile terminal device 90 is a smartphone. The mobile terminal device 90 includes a processor 91, a storage unit 92, a display operation unit 93, the position information acquisition unit 94, a sensor unit 95, and a communication interface 96.

The processor 91 executes programs stored in the storage unit 92 to perform various processes. The storage unit 92 is implemented by memories such as a RAM or a ROM. The storage unit 92 stores an information provision application program 97. The storage unit 92 also stores the first motion information 31 and the first position information 32. The display operation unit 93 includes a touch panel. The display operation unit 93 displays information on the touch panel and receives operations input on the touch panel.

The position information acquisition unit 94 includes a GNSS (Global Navigation Satellite System) receiver (not shown), and receives signals from positioning satellites under the control of the processor 91. In the present embodiment, the position information acquisition unit 94 uses the GPS (Global Positioning System) as the GNSS. The position information acquisition unit 94 may acquire position information using other satellite positioning systems such as the Quasi-Zenith Satellite System. The sensor unit 95 includes a geomagnetic sensor and an acceleration sensor. The position information acquisition unit 94 may correct the position information using detected values from the sensor unit 95, radio waves from a base station of a mobile communication system, radio waves from an access point of a wireless LAN (Local Area Network), etc.

The communication interface 96 performs short-range communication with the communication interface 84 of the ear-attached device 80. The communication interface 96 communicates with the communication interface 40 of the information analysis system 1 using a mobile communication system such as 5G (5th Generation Mobile Communication System). The communication method between the communication interface 96 and the communication interface 40 of the information analysis system 1 is not limited to the mobile communication system, but may be a method using a wireless LAN, or a combination of these may be used. Communication between the ear-attached device 80 and the mobile terminal device 90 is not limited to wireless communication, but may be wired communication.

The processor 91 of the mobile terminal device 90 executes the information provision application program 97 to sequentially transmit the first motion information 31 acquired by the motion sensor 81 and the first position information 32 acquired by the position information acquisition unit 94 to the information analysis system 1. That is, the first motion information 31 is information indicating a motion of the head of the purchaser PU, that is, a person. In the present embodiment, the first motion information 31 includes a detected value from the motion sensor 81 and a current angle from a zero reference position created by the information provision application program 97 using the detected value from the motion sensor 81. The first position information is position information of a person, specifically, the purchaser PU. The information analysis system 1 stores the received first motion information 31 and the received first position information 32 in the storage unit 30.

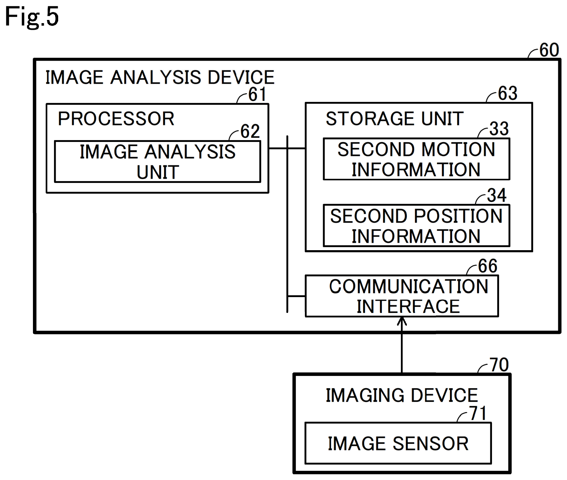

FIG. 5 is a block diagram showing the configuration of the image analysis device 60. As shown in FIG. 2, in the present embodiment, the image analysis device 60 is installed in a store ST where an imaging device 70 is installed. In the store ST, product shelves SH are disposed. Commercial products ME are displayed on the product shelves SH. Specifically, the imaging device 70 is a camera including the image sensor 71. The image sensor 71 is a sensor that converts light into an electric signal, such as a CCD (Charge-Coupled Device) image sensor. The imaging device 70 is installed to capture images of the commercial products ME and the purchaser PU. Although only one imaging device 70 is shown in FIG. 2, a plurality of imaging devices 70 may be installed in the store ST.

As shown in FIG. 5, the image analysis device 60 is configured as a computer in which a processor 61, a storage unit 63, and a communication interface 66 are interconnected by a bus. The processor 61 executes programs stored in the storage unit 63 to perform various processes. The processor 61 includes an image analysis unit 62 as a functional unit. The image analysis unit 62 is implemented by executing a program stored in the storage unit 63.

The storage unit 63 is implemented by memories such as a RAM or a ROM. The storage unit 63 stores the second motion information 33 and the second position information 34. The communication interface 66 and the imaging device 70 are connected via a video cable. The communication interface 66 communicates with the communication interface 40 of the information analysis system 1 using a mobile communication system such as 5G. The communication method between the communication interface 66 and the communication interface 40 of the information analysis system 1 is not limited to the mobile communication system, but may be a method using a wireless LAN, or a combination of these may be used.

The image analysis unit 62 creates the second motion information 33 and the second position information 34 using an image including the purchaser PU and captured using the imaging device 70 located at a known installation position. Specifically, the image of the purchaser PU captured by and input from the imaging device 70 is analyzed to create the second motion information 33 indicating a motion of the head of the purchaser PU. In the present embodiment, the second motion information 33 is information equivalent to a detected value from the motion sensor 81 or information that can be converted into information on an angle that can be determined from an angular velocity output by the motion sensor 81. The image analysis unit 62 analyzes the image of the purchaser PU captured by and input from the imaging device 70 to create the second position information 34 indicating position information of the purchaser PU. The information on the motion in the second motion information 33 is associated with information on a date and time. The information on the position in the second position information 34 is associated with information on a date and time. When a plurality of imaging devices 70 is provided as described above, the image analysis unit 62 may analyze a plurality of images captured by the plurality of imaging devices 70.

The image analysis unit 62 sequentially transmits the created second motion information 33 and the created second position information 34 to the information analysis system 1. The information analysis system 1 stores the received second motion information 33 and the received second position information 34 in the storage unit 30.

### A2. Information Correction Process:

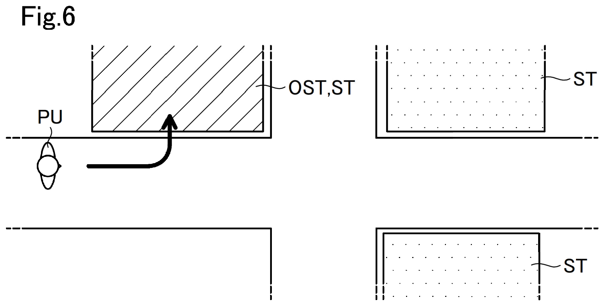

FIG. 6 is a diagram illustrating an information correction process. FIG. 6 is a map showing a state in which a plurality of stores ST is located. Among the plurality of stores ST, the store ST in which the imaging device 70 and the image analysis device 60 are disposed will be referred to as a target store OST.

The zero reference position of the motion sensor 81 built in the ear-attached device 80 attached to the purchaser PU is adjusted using the mobile terminal device 90 when the ear-attached device 80 is attached to the purchaser PU. As described above, the information provision application program 97 uses a detected value of the angular velocity from the motion sensor 81 to determine a current angle with respect to the zero reference position, and creates the first motion information 31. Then, the information provision application program 97 sets the angles on the three axes of the motion sensor 81 to "zero" when the purchaser PU is in a posture in which his/her head is not tilted. Depending on, for example, how the ear-attached device 80 is attached, however, there is a possibility that the angles on the three axes are not "zero" even when the purchaser PU is in the posture in which his/her head is not tilted. In this case, a error occurs between the actual posture of the head of the purchaser PU and the angle determined based on the detected value from the motion sensor 81. An error may occur also between the first position information 32 and the actual current position. Therefore, the information analysis system 1 performs the information correction process to correct the first motion information 31 and the first position information 32. Thus, it is possible to improve the accuracy of the first motion information 31 obtained using the motion sensor 81 relative to the actual posture. Further, it is possible to improve the accuracy of the first position information 32 relative to the actual current position.

Through the correction, when the purchaser PU enters the store ST other than the target store OST, the accuracy of purchase information 35 described in a second embodiment can be improved. Through the correction, it is possible to improve the quality of a service such as guidance on a target object that is presumably being viewed by the purchaser PU.

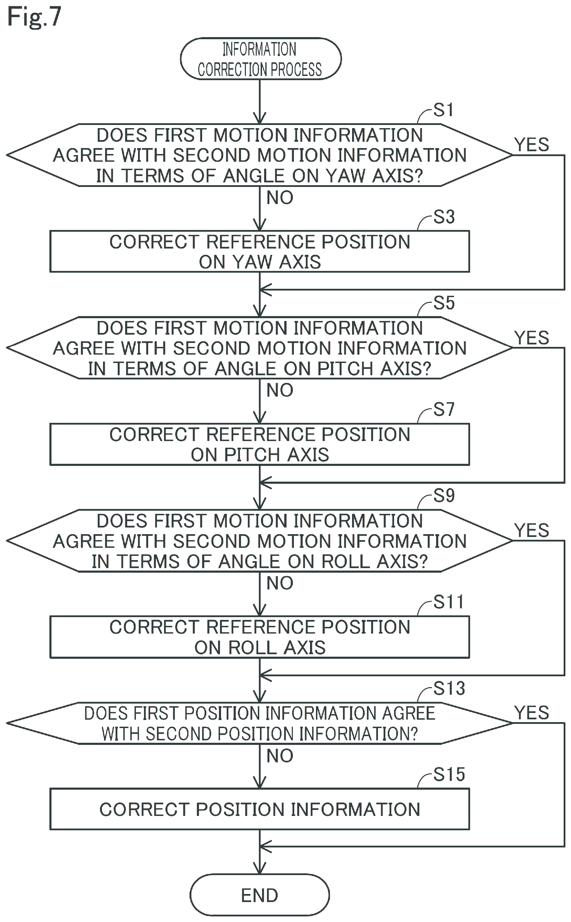

FIG. 7 is a flowchart showing the procedure of the information correction process. The start determination unit 22 determines whether the purchaser PU has entered the target store OST. Specifically, when determination is made using the first position information 32 that the current position of the purchaser PU is within a predetermined reference position range, determination is made that the purchaser PU has entered the target store OST. The reference position range is a position range indicating an area inside the target store OST. When the start determination unit 22 determines that the purchaser PU has entered the target store OST, the information correction process is started.

In step S1, the motion information correction unit 27 determines whether the first motion information 31 agrees with the second motion information 33 in terms of the angle on the yaw axis. In step S1, the motion information correction unit 27 determines a first angular difference D1 using the following equation (1). $D 1 = θ 1 a - θ 1 b$ (1) In the equation (1), "θ1a" is an angle on the yaw axis in the first motion information 31. That is, "θ1a" in the equation (1) is an angle on the yaw axis determined based on a detected value from the motion sensor 81. In the equation (1), "θ1b" is an angle on the yaw axis in the second motion information 33. That is, "θ1b" in the equation (1) is an angle on the yaw axis determined based on an image captured by the imaging device 70. When the first angular difference D1 is within a predetermined first reference range, the motion information correction unit 27 determines that the first motion information 31 agrees with the second motion information 33. When the first angular difference D1 is outside the first reference range, the motion information correction unit 27 determines that the first motion information 31 does not agree with the second motion information 33. The first reference range is a range determined by experiment etc.

When determination is made in step S1 that the first motion information 31 does not agree with the second motion information 33 in terms of the angle on the yaw axis, the motion information correction unit 27 corrects the zero reference position on the yaw axis in the first motion information 31 in step S3. Specifically, the motion information correction unit 27 transmits a command signal to the mobile terminal device 90 to set a position obtained by subtracting the first angular difference D1 from the current reference position as a new zero reference position. When the command signal is received, the mobile terminal device 90 corrects, using the first angular difference D1, the zero reference position in the first motion information 31 created using the detected value from the motion sensor 81.

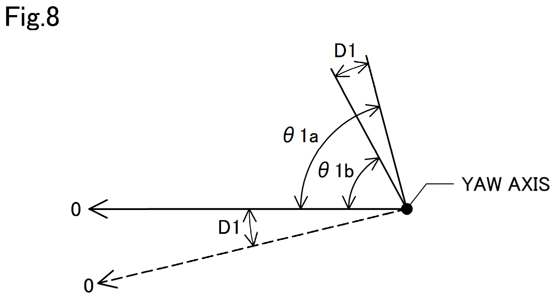

FIG. 8 is a diagram illustrating step S3. In step S3, the zero reference position is corrected to a position indicated by the dashed line rotated by the first angular difference D1 that is the angular difference between the angle θ1a on the yaw axis in the first motion information 31 and the angle θ1b on the yaw axis in the second motion information 33. That is, the dashed arrow shown in FIG. 8 indicates the new zero reference position. By correcting the zero reference position in step S3, the accuracy of the angle on the yaw axis in the first motion information 31 can be improved from this time onwards.

When determination is made in step S1 in FIG. 7 that the first motion information 31 agrees with the second motion information 33 in terms of the angle on the yaw axis, no correction is necessary. Therefore, the motion information correction unit 27 advances the process to step S5.

In step S5, the motion information correction unit 27 determines whether the first motion information 31 agrees with the second motion information 33 in terms of the angle on the pitch axis. Step S5 is performed in the same manner as in step S1, except that the pitch axis is the processing target. When determination is made in step S5 that the first motion information 31 does not agree with the second motion information 33 in terms of the angle on the pitch axis, the motion information correction unit 27 corrects the zero reference position on the pitch axis in the first motion information 31 in step S7. Step S7 is performed in the same manner as in step S3, except that the pitch axis is the processing target. When determination is made in step S5 that the first motion information 31 agrees with the second motion information 33 in terms of the angle on the pitch axis, the motion information correction unit 27 advances the process to step S9.

In step S9, the motion information correction unit 27 determines whether the first motion information 31 agrees with the second motion information 33 in terms of the angle on the roll axis. Step S9 is performed in the same manner as in step S1, except that the roll axis is the processing target. When determination is made in step S9 that the first motion information 31 does not agree with the second motion information 33 in terms of the angle on the roll axis, the motion information correction unit 27 corrects the zero reference position on the roll axis in the first motion information 31 in step S11. Step S11 is performed in the same manner as in step S3, except that the roll axis is the processing target. When determination is made in step S9 that the first motion information 31 agrees with the second motion information 33 in terms of the angle on the roll axis, the motion information correction unit 27 advances the process to step S13.

In step S13, the position information correction unit 28 determines whether the first position information 32 agrees with the second position information 34. When the position information is expressed, for example, in an XYZ coordinate system, the position information correction unit 28 determines whether the first position information 32 agrees with the second position information 34 in terms of the X-coordinate, the Y-coordinate, and the Z-coordinate. When at least one of the X-coordinate, the Y-coordinate, and the Z-coordinate does not agree, the position information correction unit 28 determines that the first position information 32 does not agree with the second position information 34. When determination is made in step S13 that the first position information 32 does not agree with the second position information 34, the position information correction unit 28 corrects the first position information 32 in step S15 such that the first position information 32 agrees with the second position information 34. In step S15, specifically, the position information correction unit 28 transmits a command signal to the mobile terminal device 90 to set the corrected coordinates to values obtained by subtracting a difference between the first position information 32 and the second position information 34 from the first position information 32 similarly to the first motion information 31. When the command signal is received, the mobile terminal device 90 corrects the first position information 32.

When determination is made in step S13 that the first position information 32 agrees with the second position information 34, or after step S15 is performed, the motion information correction unit 27 ends the current processing routine.

According to the first embodiment described above, the information analysis system 1 includes the first motion information acquisition unit 23, the first position information acquisition unit 24, the second motion information acquisition unit 25, the second position information acquisition unit 26, the motion information correction unit 27, and the position information correction unit 28. The motion information correction unit corrects the first motion information 31 using the second motion information 33. The position information correction unit 28 corrects the first position information 32 using the second position information 34. Therefore, the accuracy of the first motion information 31 and the first position information 32 can be improved.

Each of the second motion information 33 and the second position information 34 is information created using an image including a person and captured using the imaging device 70 located at the known installation position. By using the image captured using the imaging device 70 located at the known installation position, the second motion information 33 and the second position information 34 with less errors can be used for correction.

### B. Second Embodiment:

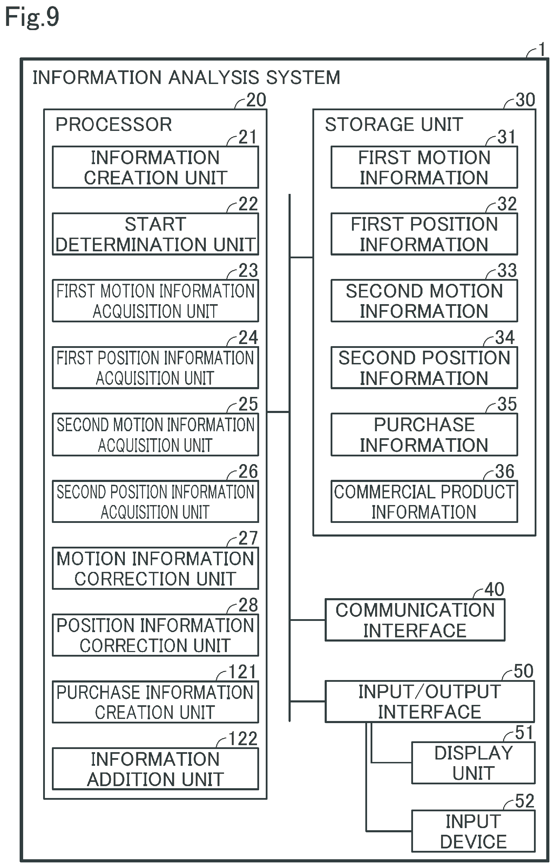

FIG. 9 is a block diagram showing the configuration of the information analysis system 1 according to the present embodiment. As shown in FIG. 9, the processor 20 differs from that in the first embodiment in that it includes, as functional units, a purchase information creation unit 121 serving as a creation unit and an information addition unit 122. The storage unit 30 differs from that in the first embodiment in that it stores purchase information 35 serving as target object information and target object history information, and commercial product information 36. The same components and processing steps as those in the first embodiment are denoted by the same reference numerals, and detailed description thereof will be omitted as appropriate.

The purchase information creation unit 121 uses the first motion information 31 and the first position information 32 to identify a target object to which a person has turned his/her face, and creates the purchase information 35 serving as the target object information including the target object. In the present embodiment, the target object is specifically the commercial product ME displayed on the product shelf SH shown in FIG. 2. In the present embodiment, the purchase information 35 also serves as the target object history information in which target objects are arranged in chronological order in which a person has turned his/her face to them. With the purchase information 35, it is possible to know which position on the product shelf SH was viewed by the purchaser PU shown in FIG. 2 to select the commercial product ME in the store ST. The purchase information 35 can be used as information for considering procurement of the commercial product ME or the location of the commercial product ME.

In the present embodiment, in a purchase information creation process described later, the target object to which the purchaser PU has turned his/her face is identified as the position information of the product shelf SH. The information addition unit 122 adds a commercial product ID serving as identification information of the commercial product ME to the purchase information 35 using the position information of the product shelf SH and the commercial product information 36.

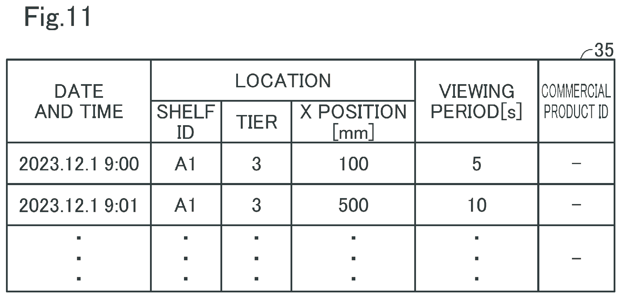

FIG. 11 is a diagram showing the purchase information 35. The purchase information 35 is data in a table format in which items "date and time," "location," "viewing period," and "commercial product ID" are grouped together. The item "location" further includes items "shelf ID," "tier," and "X position." In the item "shelf ID," an identifier preassigned to the product shelf SH in the store ST shown in FIG. 2 is input. In the item "tier," a number indicating the tier from the bottom of the product shelf SH is input. In the item "X position," a dimension based on the left edge is input as a position in the same tier. The other items will be described later.

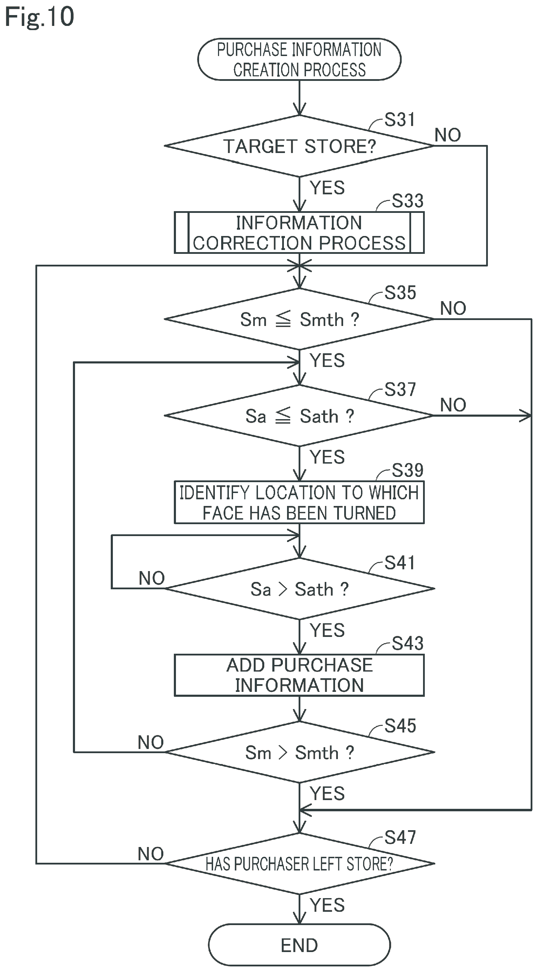

FIG. 10 is a flowchart showing the procedure of the purchase information creation process. When the start determination unit 22 determines that the purchaser PU has entered the store ST, the purchase information creation process shown in FIG. 10 is started. In step S31, the start determination unit 22 determines whether the store ST that the purchaser PU has entered is the target store OST. When the start determination unit 22 determines that the store ST that the purchaser PU has entered is the target store OST, the information correction process is performed in step S33. The information correction process is performed in the same manner as in the first embodiment. When the start determination unit 22 determines that the store ST that the purchaser PU has entered is not the target store OST, the process proceeds to step S35.

In step S35, the purchase information creation unit 121 determines whether a detected speed Sm determined based on a detected value of the acceleration from the motion sensor 81 is equal to or less than a reference speed Smth. The reference speed Smth is a speed for determining whether the purchaser PU has stopped to select the commercial product ME, and is determined in advance by experiment etc. When determination is made in step S35 that the detected speed Sm is not equal to or less than the reference speed Smth, the purchase information creation unit 121 advances the process to step S47.

When determination is made in step S35 that the detected speed Sm is equal to or less than the reference speed Smth, the purchase information creation unit 121 determines in step S37 whether a detected angular velocity Sa detected by the motion sensor 81 is equal to or less than a reference angular velocity Sath. The reference angular velocity Sath is an angular velocity for determining whether the purchaser PU is gazing at one commercial product ME to select the commercial product ME, and is determined in advance by experiment etc. When all of the angular velocities on the three axes are equal to or less than the reference angular velocity Sath in step S37, the purchase information creation unit 121 determines that the detected angular velocity Sa is equal to or less than the reference angular velocity Sath.

When determination is made in step S37 that the detected angular velocity Sa is not equal to or less than the reference angular velocity Sath, the purchase information creation unit 121 advances the process to step S47.

When determination is made in step S37 that the detected angular velocity Sa is equal to or less than the reference angular velocity Sath, the purchase information creation unit 121 identifies, in step S39, the location to which the purchaser PU has turned his/her face, that is, the location that is presumably being viewed by the purchaser PU. Specifically, the purchase information creation unit 121 uses the first motion information 31, the first position information 32, the facility information of the store ST, and the physical information of the purchaser PU to identify the location to which the purchaser PU has turned his/her face. The facility information of the store ST is information such as shelf IDs, positions, dimensions, number of tiers, etc. about the product shelves SH in the store ST. The "shelf ID" is identification information that is preassigned to the product shelf SH in the store ST and identifies the product shelf SH. The physical information of the purchaser PU includes the height of the purchaser PU etc. The facility information of the store ST and the physical information of the purchaser PU are prestored in the storage unit 30. The location to which the purchaser PU has turned his/her face is identified by the values of the items "shelf ID," "tier," and "X position" in the purchase information 35 described above.

In step S41, the purchase information creation unit 121 determines whether the detected angular velocity Sa is more than the reference angular velocity Sath. Step S41 is a processing step for determining whether the purchaser PU has shifted his/her line of sight to a commercial product ME other than the commercial product ME at which he/she has been gazing. When the angular velocity on at least one of the three axes is more than the reference angular velocity Sath in step S41, the purchase information creation unit 121 determines that the detected angular velocity Sa is more than the reference angular velocity Sath.

When determination is made in step S41 that the detected angular velocity Sa is not more than the reference angular velocity Sath, the purchase information creation unit 121 repeatedly performs step S41 at predetermined time intervals until determination is made that the detected angular velocity Sa is more than the reference angular velocity Sath. The predetermined time interval is, for example, about several milliseconds.

When determination is made in step S41 that the detected angular velocity Sa is more than the reference angular velocity Sath, the purchase information creation unit 121 adds information to the purchase information 35 in step S43. Specifically, the purchase information creation unit 121 inputs values to the items of the purchase information 35 and adds one row. In the "date and time" field of the purchase information 35, the date and time at which determination is made in step S37 that the detected angular velocity Sa is equal to or less than the reference angular velocity Sath is input. In the "viewing period" field of the purchase information 35, a period from the time when the purchase information creation unit 121 determines in step S37 that the detected angular velocity Sa is equal to or less than the reference angular velocity Sath to the time when the purchase information creation unit 121 determines in step S41 that the detected angular velocity Sa is more than the reference angular velocity Sath is input. The value identified in step S39 is input to the "location" field of the purchase information 35. A null value is input to the "commercial product ID" field of the purchase information 35. That is, the purchase information 35 is history information in which the locations of the target objects are arranged in chronological order in which the purchaser PU has turned his/her face to them.

In step S45, the purchase information creation unit 121 determines whether the detected speed Sm determined based on the detected value of the acceleration from the motion sensor 81 is more than the reference speed Smth. Step S45 is a processing step for determining whether the purchaser PU has moved. When determination is made in step S45 that the detected speed Sm is not more than the reference speed Smth, the purchase information creation unit 121 returns the process to step S37. In this case, there is a high possibility that the purchaser PU views a commercial product ME displayed on the same product shelf SH without moving.

When determination is made in step S45 that the detected speed Sm is more than the reference speed Smth, the purchase information creation unit 121 determines in step S47 whether the purchaser PU has left the store ST. When determination is made in step S47 that the purchaser PU has not left the store ST, the purchase information creation unit 121 returns the process to step S35. In this case, there is a high possibility that the purchaser PU moves around the store and views a commercial product ME on another product shelf SH.

When determination is made in step S47 that the purchaser PU has left the store ST, the purchase information creation unit 121 ends the current processing routine. Through the current processing routine, the purchase information 35 is created as a history of the locations where the purchaser PU has viewed the commercial products from the entry to the leaving in the store ST.

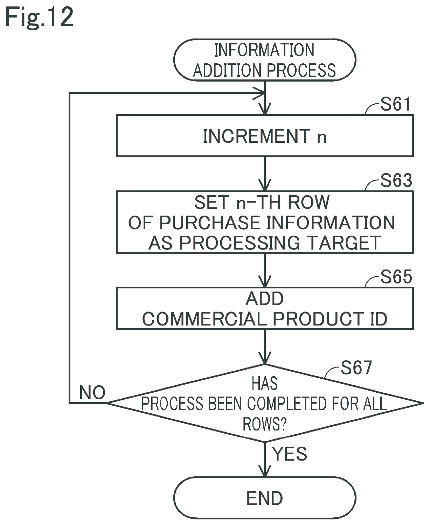

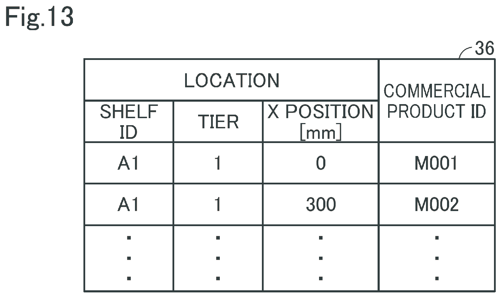

FIG. 12 is a flowchart showing the procedure of an information addition process. The purchase information 35 includes information on the location where the purchaser PU has presumably viewed the commercial product. The information addition unit 122 performs the information addition process to add information on the commercial product ME displayed at the location where the purchaser PU has presumably viewed it. FIG. 13 is a diagram showing the commercial product information 36 used by the information addition unit 122. As shown in FIG. 13, the commercial product information 36 is data in which the items "location" and "commercial product ID" are grouped together. The item "location" of the commercial product information 36 is the same as the item "location" of the purchase information 35. In the item "commercial product ID," an identifier is input as identification information for identifying the commercial product. In the case of the target store OST, the commercial product information 36 is created by the image analysis device 60. In the case of the store ST, that is, the store ST where the image analysis device 60 is not installed, the commercial product information 36 is created manually.

When the purchase information creation unit 121 finishes creating the purchase information 35, the information addition unit 122 performs the information addition process. When the information addition process is started, the information addition unit 122 sets a variable n used in the process to an initial value of zero.

In step S61 in FIG. 12, the information addition unit 122 increments the variable n. In step S63, the information addition unit 122 sets the n-th row of the purchase information 35 as the processing target. In step S65, using the commercial product information 36, the information addition unit 122 finds the commercial product ID corresponding to the value of "location" on the n-th row of the purchase information 35, and inputs the found identifier to "commercial product ID" on the n-th row. In step S67, the information addition unit 122 determines whether the process has been completed for all rows. When determination is made in step S67 that the process has not been completed, the information addition unit 122 returns the process to step S61. When determination is made in step S67 that the process has been completed, the information addition unit 122 ends the current processing routine.

According to the second embodiment described above, the purchase information creation unit 121 creates the purchase information 35 by identifying the position of the target object to which the purchaser PU has turned his/her face. The information addition unit 122 adds the information on the commercial product ID to the purchase information 35. With the purchase information 35, analysis can be performed on the behavior of a person to select the commercial product ME.

In the second embodiment, the information addition unit 122 adds the identification information of the commercial product ME to the purchase information 35. The identification information added to the purchase information 35 may be identification information of an advertisement instead of the commercial product ME. Examples of the advertisement include a POP (Point of purchase advertising). When the target object to which the purchaser PU has turned his/her face is an advertisement, the created target object information can be used to analyze the influence of the advertisement on people's purchases.

### C. Third Embodiment:

The present embodiment differs from the second embodiment in that the image analysis unit 62 serving as a psychological information acquisition unit acquires the psychological state of the purchaser PU using an image including the purchaser PU and captured by the imaging device 70. Only the differences from the second embodiment will be described, and the other description will be omitted. The same components and processing steps as those in each of the above embodiments are denoted by the same reference numerals, and detailed description thereof will be omitted as appropriate.

Specifically, the psychological state is a heart rate and a complexion of the purchaser PU. The image analysis unit 62 analyzes the image and creates psychological information by associating the acquired heart rate and the acquired complexion with the date and time. The information addition unit 122 adds the acquired information on the heart rate and the complexion to the purchase information 35 in association with the date and time in the purchase information 35. Specifically, the "complexion" refers to a facial equation of the purchaser PU, such as a smile or a stern face, and the healthiness or unhealthiness on the face. The information addition unit 122 uses the psychological information to determine an evaluation value indicating the person's level of interest in the target object, and adds the determined evaluation value to the purchase information 35. Specifically, in the case of the heart rate, the information addition unit 122 reduces the evaluation value when the heart rate is lower than normal. The information addition unit 122 increases the evaluation value when the heart rate of the purchaser PU is higher than normal. Specifically, in the case of the complexion, the information addition unit 122 increases the evaluation value when the purchaser PU has a healthy complexion or appears to be smiling. The information addition unit 122 reduces the evaluation value when the purchaser PU does not have a healthy complexion or has a stern face. More specifically, the evaluation value is ranked as "A," "B," or "C" in descending order of interest.

According to the third embodiment, the image analysis unit 62 and the information addition unit 122 add the psychological information of the purchaser PU and the evaluation value indicating the level of interest to the purchase information 35. By adding the psychological information and the evaluation value to the purchase information 35, it becomes easier to analyze the influence of the commercial product ME on people using the purchase information 35.

### D. Fourth Embodiment:

The present embodiment differs from the second embodiment in that the processor 20 of the information analysis system 1 further includes a sound information acquisition unit as a functional unit. Only the differences from the second embodiment will be described, and the other description will be omitted. The same components and processing steps as those in each of the above embodiments are denoted by the same reference numerals, and detailed description thereof will be omitted as appropriate.

The sound information acquisition unit acquires sound information collected by the microphone 83 built in the ear-attached device 80. That is, the sound information collected by the microphone 83 is sound information that is presumably heard by the purchaser PU. The sound information may be, for example, an announcement made in the store ST. The information addition unit 122 adds the acquired sound information to the purchase information 35 in association with the date and time in the purchase information 35.

According to the fourth embodiment, the sound information acquisition unit and the information addition unit 122 add the sound information that is presumably heard by the purchaser PU to the purchase information 35. Therefore, the influence of the sound such as an announcement to the purchaser PU on the behavior of the purchaser PU can be analyzed using the purchase information 35.

### E. Other Embodiments:

(E1) In the first embodiment, the motion information correction unit 27 commands the mobile terminal device 90 to correct the zero reference position in the first motion information 31. Similarly, the position information correction unit 28 commands the mobile terminal device 90 to correct the first position information 32. Thus, the first motion information 31 created by the mobile terminal device 90 and indicating the current motion and the first position information 32 created by the mobile terminal device 90 and indicating the current position are corrected. In another embodiment, when the purchase information 35 is to be used as in the second embodiment, the correction need not be performed in real time. Therefore, after the purchase information 35 is created, the information correction process may be performed to correct the location to which the purchaser PU has turned his/her face in the purchase information 35.
(E2) In the first embodiment, the device equipped with the motion sensor 81 is the ear-attached device 80. The device equipped with the motion sensor 81 is not limited to a device attached to the ear of the purchaser PU, but may be a device attached to the head of the purchaser PU. Specifically, the device equipped with the motion sensor 81 may be a device attached to the head of the purchaser PU or a device attached over the eyes of the purchaser PU.
(E3) In the second embodiment, the purchase information 35 in which the locations to which the purchaser PU has turned his/her face are arranged in chronological order is created. In another embodiment, the purchase information creation unit 121 may create target object information including at least one location to which the purchaser PU has turned his/her face. The target object information including at least one location to which the purchaser PU has turned his/her face can be used to consider the location of the commercial product ME.
(E4) In the first embodiment, the second sensor used to create the second motion information 33 and the second position information 34 is the image sensor 71. The second sensor is not limited to the image sensor 71. The second sensor may be, for example, a sensor that detects infrared rays or far-infrared rays instead of visible light to detect the body temperature of the purchaser PU. In the first embodiment, the imaging device 70 is fixed to the store ST, but may be an unfixed imaging device. Examples of the unfixed imaging device include an imaging device owned by a person other than the purchaser PU.
(E5) In the third embodiment, the psychological information of the purchaser PU is acquired by the image analysis unit 62. In another embodiment, the psychological information acquisition unit may be a heart rate monitor attached to the purchaser PU. Specifically, the psychological information acquisition unit may be implemented by a heart rate monitor built in a wristwatch attached to the wrist of the purchaser PU.
(E6) In the second embodiment, the purchase information creation unit 121 creates the purchase information 35 serving as the target object history information. In another embodiment, the purchase information creation unit 121 may create purchase information 35 serving as target object history information in which the commercial products ME serving as the target objects are arranged in descending order of the viewing period in which a person has directed his/her face to them. When creating the target object history information in which the target objects are arranged in descending order of the viewing period, the purchase information creation unit 121 creates the target object history information by rearranging the "commercial product IDs" in the created purchase information 35 in descending order of the "viewing period." With this target object history information, it is possible to provide information on the commercial products ME that are attracting attention.

The present disclosure is not limited to the embodiments described above, and can be implemented in various configurations without departing from the spirit thereof. For example, the technical features in the embodiments corresponding to the technical features in the aspects described in SUMMARY OF THE INVENTION can be replaced or combined as appropriate to solve some or all of the problems described above or to achieve some or all of the effects described above. Unless the technical features are described as being essential herein, they can be omitted as appropriate.

### Description of the Reference Numerals

1 ... information analysis system, 20 ... processor, 21 ... information creation unit, 22 ... start determination unit, 23 ... first motion information acquisition unit, 24 ... first position information acquisition unit, 25 ... second motion information acquisition unit, 26 ... second position information acquisition unit, 27 ... motion information correction unit, 28 ... position information correction unit, 30 ... storage unit, 31 ... first motion information, 32 ... first position information, 33 ... second motion information, 34 ... second position information, 35 ... purchase information, 36 ... commercial product information, 40 ... communication interface, 50 ... input/output interface, 51 ... display unit, 52 ... input device, 60 ... image analysis device, 61 ... processor, 62 ... image analysis unit, 63 ... storage unit, 66 ... communication interface, 70 ... imaging device, 71 ... image sensor, 80 ... ear-attached device, 80a ... housing, 81 ... motion sensor, 82 ... sound conversion unit, 83 ... microphone, 84 ... communication interface, 90 ... mobile terminal device, 91 ... processor, 92 ... storage unit, 93 ... display operation unit, 94 ... position information acquisition unit, 95 ... sensor unit, 96 ... communication interface, 97 ... information provision application program, 121 ... purchase information creation unit, 122 ... information addition unit, ME ... commercial product, OST ... target store, PU ... purchaser, SH ... product shelf, ST ... store

## Claims

1. An information analysis system comprising:
a first motion information acquisition unit that acquires first motion information that is created using a first sensor attached to a head of a person and indicates a motion of the head;
a first position information acquisition unit that acquires first position information that is created using a position information acquisition unit attached to the person and is position information of the person;
a second motion information acquisition unit that acquires second motion information that is created using a second sensor different from the first sensor and indicates the motion of the head;
a second position information acquisition unit that acquires second position information that is created using a second sensor different from the first sensor and is the position information;
a motion information correction unit that corrects the first motion information using the second motion information; and
a position information correction unit that corrects the first position information using the second position information.

2. The information analysis system according to claim 1, wherein:
the second sensor used to create the second motion information is an image sensor that is the same as the second sensor used to create the second position information; and
each of the second motion information and the second position information is information created using an image including the person, the image being captured by an imaging device including the second sensor and having a known installation position.

3. The information analysis system according to claim 1, further comprising a creation unit that uses the first motion information and the first position information to identify a target object to which the person has turned a face, and creates target object information including the target object.

4. The information analysis system according to claim 3, wherein the creation unit creates at least one of (a) target object history information in which the target objects are arranged in chronological order in which the person has turned the face to the target objects, and (b) target object history information in which the target objects are arranged in descending order of a viewing period in which the person has directed the face to the target objects.

5. The information analysis system according to claim 3 or 4, wherein:
the target object is a commercial product; and
the information analysis system further includes an information addition unit that adds identification information of the commercial product to the target object information.

6. The information analysis system according to claim 3 or 4, wherein:
the target object is an advertisement; and
the information analysis system further includes an information addition unit that adds identification information of the advertisement to the target object information.

7. The information analysis system according to claim 1, wherein the first sensor is a motion sensor built in an ear-attached device.

8. The information analysis system according to claim 3 or 4, further comprising:
a psychological information acquisition unit that acquires psychological information indicating a psychological state of the person; and
an information addition unit that adds the psychological information to the target object information.

9. The information analysis system according to claim 8, wherein the psychological information includes at least one of a heart rate of the person and information on a complexion of the person.

10. The information analysis system according to claim 8, wherein the information addition unit uses the psychological information to determine an evaluation value indicating a level of interest of the person in the target object, and adds the evaluation value to the target object information.

11. The information analysis system according to claim 4, further comprising:
a sound information acquisition unit that acquires sound information that is presumably heard by the person; and
an information addition unit that adds the sound information to the target object history information.
